# EUROPÄISCHE PATENTSCHRIFT

(11) **EP 2 504 918 B1**
(45) Veröffentlichungstag und Bekanntmachung des Hinweises auf die Patenterteilung: **16.01.2019**
(21) Anmeldenummer: 10777022.4
(22) Anmeldetag: 17.11.2010
(51) Int. Cl.: H02P 29/024, H02J 7/14, H02P 9/10

(54) **VERMEIDUNG VON LASTABWURF-ÜBERSPANNUNGEN BEI SYNCHRONGLEICHRICHTERN**
PREVENTING LOAD REJECTION OVERVOLTAGES IN SYNCHRONOUS RECTIFIERS
PRÉVENTION DES SURTENSIONS DE DÉLESTAGE SUR LES REDRESSEURS SYNCHRONES

(30) Priorität: 23.11.2009 DE 102009046955
(43) Veröffentlichungstag der Anmeldung: 03.10.2012
(73) Patentinhaber: SEG Automotive Germany GmbH, 70499 Stuttgart (DE)
(72) Erfinder: WINDMUELLER, Andreas, 71679 Asperg (DE); HERBIG, Ralf, 71229 Leonberg (DE); MEHRINGER, Paul, 70569 Stuttgart (DE); SHENDI, Alexander, 71679 Asperg (DE); MAGINI, Fabio, 71282 Hemmingen (DE)
(74) Vertreter: Steinbauer, Florian
(86) Internationale Anmeldenummer: PCT/EP2010/067614
(87) Internationale Veröffentlichungsnummer: WO 2011/061200

(56) Entgegenhaltungen:
- EP-A2- 0 777 309
- EP-A2- 1 443 623
- DE-A1-102005 054 145

## Beschreibung

Die vorliegende Erfindung betrifft ein Verfahren zur Vermeidung von Lastabwurf-Überspannungen beim Betrieb eines Synchrongleichrichters für einen mehrphasigen Wechselstrom gemäß dem Oberbegriff von Patentanspruch 1.

### Stand der Technik

Zur Speisung von Gleichstromsystemen aus Drehstromquellen, wie z.B. dem öffentlichen Drehstromnetz, werden bekanntermaßen Gleichrichter verwendet. Die Gleichrichter sind in der Regel in Brückenschaltung aufgebaut, wobei im einfachsten Fall Dioden als Gleichrichterelemente verwendet werden. Diese Dioden erfordern keine weitere Ansteuerschaltung, da sie selbstständig zum richtigen Zeitpunkt, d. h. beim Über- und Unterschreiten von Spannungsschwellwerten, in den leitenden oder sperrenden Zustand übergehen.

Brückengleichrichter in sechspulsiger Ausführung (bei dreiphasigen Strömen) werden auch als Gleichrichter in Drehstromgeneratoren von Kraftfahrzeugen (Lichtmaschinen) verwendet. Derartige Generatoren besitzen einen ausgeprägten induktiven Innenwiderstand.

Ein Brückengleichrichter weist eine durch die Dioden und den Ausgangsstrom definierte Verlustleistung auf. Durch schaltungstechnische Maßnahmen, wie z. B. das Parallelschalten von Dioden, lassen sich diese Verluste nur unwesentlich reduzieren.

Aus Effizienzerwägungen heraus ist es jedoch erwünscht, diese Verluste zu verringern. Hierzu können die Dioden durch aktive Schalter (z. B. MOSFET-Transistoren) ersetzt werden. Wie im Folgenden dargestellt, sind in diesem Fall jedoch zusätzliche Schutzfunktionen bzw. -strategien vorzusehen.

Ein kritischer Fehlerfall beim Entwurf jedes aktiven Gleichrichters ist der Lastabwurf ("Load Dump"). Dieser tritt dann auf, wenn sich bei entsprechend hoch erregter Maschine und einem entsprechend hohen abgegebenen Strom die Last am Generator (beispielsweise durch Abschalten von Verbrauchern) schlagartig verringert, und dies nicht durch kapazitiv wirkende Elemente im Bordnetz (wie z.B. die Batterie) abgefangen werden kann.

Hierbei ist es im Extremfall möglich, dass der Generator bis zu einer Dauer von cirka 300 bis 500 ms weiterhin Energie ins Bordnetz liefert. Diese Energie muss dann im Gleichrichter umgesetzt ("gelöscht") werden können, um elektrische Komponenten, die an den Generator angeschlossen sind, vor Überspannungsschäden zu schützen. Dieser Schutz erfolgt bei klassischen Gleichrichtern in der Regel durch eine Ausführung der Gleichrichterdioden als Leistungs-Zenerdioden.

In herkömmlichen Diodengleichrichtern kann also die Verlustenergie effektiv in Wärme umgesetzt werden. Die Dioden bieten eine ausreichend gute Aufbau- und Verbindungstechnik mit einer flächendeckenden thermischen Anbindung. In derzeit erhältlichen MOSFETs können diese Eigenschaften jedoch nicht zu 100% nachgebildet werden. Daher müssen andere Maßnahmen ergriffen werden, um die Verlustleistung abzufangen.

In der EP 0 777 309 B1 wird zur Löschung der Lastabwurfsenergie vorgeschlagen, einige oder alle Plus- oder Minusdioden (d. h. die Dioden, die dem Pluspol oder Minuspol des Gleichrichters zugeordnet sind, im Folgenden auch als Dioden des oberen oder unteren Gleichrichterzweigs bezeichnet) ganz oder zeitweise kurzzuschließen. In dem dort vorgeschlagenen Verfahren wird das Ansteuersignal der Brückenelemente getaktet, so dass ein minimales Spannungsniveau nicht unterschritten und ein maximales Spannungsniveau nicht überschritten wird. Eine derartige mehrfache Taktung eines Ansteuersignals innerhalb einer Halbwelle (d.h. mit einer höheren Frequenz als die jeweils anliegende Wechselstromphase) weist jedoch eine Reihe von Nachteilen auf. Neben dem Entstehen von Störspannungsspitzen (mit negativen Auswirkungen auf die elektromagnetische Verträglichkeit) werden, vor allem bei entsprechenden Abschaltvorgängen, kurzzeitig hohe Verlustleistungen in den elektrischen Schaltern erzeugt. Auch bei zu niedrig gewählter Ansteuerfrequenz der Begrenzungsschaltung besteht die Gefahr der Abgabe von Störspannungsspitzen in das sensible Bordnetz. Ansteuerschaltungen mit schneller Reaktionsgeschwindigkeit besitzen in der Regel zudem eine erhöhte Störanfälligkeit; außerdem erfordert eine entsprechende Vorrichtung eine Auswerteschaltung für jede Phase, um entsprechende Stromwerte zu erkennen.

Die EP 1 443 623 A2 offenbart ein System und ein Verfahren zum Steuern von Lastabwurfsspannungen einer Synchronmaschine. Ein Steuergerät erzeugt dabei Ansteuersignale für die Schaltelemente des oberen oder unteren Gleichrichterzweigs. Überschreitet die an einem Schaltelement anliegende Phasenspannung einen Schwellwert, wird dieses leitend geschaltet. Auch hierzu ist eine phasenindividuelle Spannungsauswertung erforderlich.

Es ist daher wünschenswert, Lastabwurf-Überspannungen in Synchrongleichrichtern für mehrphasige Wechselströme kostengünstig und sicher zu vermeiden.

### Offenbarung der Erfindung

Erfindungsgemäß wird hierzu ein Verfahren mit den Merkmalen des unabhängigen Patentanspruchs 1 vorgeschlagen. Vorteilhafte Ausgestaltungen sind Gegenstand der Unteransprüche sowie der nachfolgenden Beschreibung.

### Vorteile der Erfindung

Die vorliegende Erfindung bezieht sich auf einen Synchrongleichrichter, der durch externe Ansteuerung die Zenerung eines herkömmlichen Brückengleichrichters nachbildet, wobei beispielsweise MOSFETs als Schaltelemente verwendet werden. Diese Schaltelemente erlauben nach Maßgabe einer Steuerung eine Verbindung jedes Eingangs des Gleichrichters, an dem jeweils eine Phase des mehrphasigen Wechselstroms anliegt, mit entweder dem Pluspolausgang oder dem Minuspolausgang des Gleichrichters. Der Minuspolausgang kann geerdet sein bzw. auf Masse liegen, wodurch bei Verbindung eines Eingangs des Gleichrichters mit dem Minuspolausgang dieser auf Masse gezogen wird.

Gegenüber dem zuvor genannten Stand der Technik ist bei der vorliegenden Erfindung aufgrund des Einsatzes eines zeitgesteuerten Verfahrens, bei dem keine phasenindividuelle Lastabwurfserkennung mehr erforderlich ist, lediglich eine entsprechende Lastabwurfserkennung zwischen den Batteriepolen (B+ und B-) erforderlich. Für die phasenindividuelle Spannungsauswertung genügt beispielsweise eine einfache Komparatorik. Eine Bestimmung einer Lastabwurfssituation und eine nachfolgende Einleitung der erfindungsgemäßen Maßnahmen ist daher sehr einfach und zuverlässig durchführbar. Die eigentlichen energiereduzierenden Maßnahmen innerhalb des Lastabwurfs (d.h. innerhalb der Zeitdauer, in der eine Energiereduzierung erforderlich ist) können, sobald eine Lastabwurfssituation erkannt ist, auf Basis einer reinen Zeitsteuerung mithilfe beispielsweise einer aktuellen Drehzahl, die direkt mit der Periodendauer der Phasen eines erzeugten Drehstroms korreliert, erfolgen. Eine phasenindividuelle Überspannungserkennung, wie sie in dem genannten Stand der Technik erforderlich ist, ist hingegen nicht notwendig. Bezüglich der elektromagnetischen Verträglichkeit sind keine Nachteile zu erwarten, da sich die Ansteuerfrequenz durch die vorgeschlagene Lösung erniedrigt, nicht jedoch, wie im Stand der Technik, erhöht.

Durch die zwei vorgeschlagenen Alternativen der erfindungsgemäßen Lösung, gemäß denen jeweils genau ein Eingang des Gleichrichters während des Zeitraums des Anliegens einer vollständigen positiven Halbwelle einer an diesem Eingang angeschlossenen Wechselstromphase mit dem zweiten Ausgang (also dem Minuspolausgang) verbunden wird, und gleichzeitig oder aber alternativ jeweils genau ein Eingang während des Zeitraums des Anliegens einer vollständigen negativen Halbwelle einer an diesem Eingang angeschlossenen Wechselstromphase mit dem ersten Ausgang (also dem Pluspolausgang) verbunden wird, ist es, wie in den Patentansprüchen 8 und 9 angegeben, in besonders vorteilhafter Weise möglich, eine angepasste Reduktion der Lastabwurfsenergie zu erreichen.

Dies wird, mit anderen Worten, dadurch erreicht, dass entweder die Dioden nur eines Gleichrichterzweigs überbrückt bzw. kurzgeschlossen werden oder aber in beide Zweige gleichzeitig eingegriffen wird. Entsprechend dieser Alternativen ergibt sich eine abgestufte Entlastung.

Im Rahmen der vorliegenden Erfindung werden also während eines Lastabwurfs einzelne Stränge des Gleichrichters zeitweise kurzgeschlossen. Es sei betont, dass hierzu keine hochfrequente Taktung der Ansteuerung der entsprechenden Schaltelemente durchgeführt werden muss, sondern dass das Muster der Taktung vielmehr derart verändert wird, das einzelne Schaltelemente (beispielsweise um den Faktor 3) länger eingeschaltet bleiben. Hierdurch ist die Spannungsversorgung durch einen entsprechenden Generatorgleichrichter weiter gewährleistet und es wird eine einfache Ansteuerung mit geringem Aufwand ermöglicht. Die Leistungsabgabe des Generators ist jedoch deutlich reduziert, da die anfallende Verlustleistung, die sich im jeweiligen Zenerungszweig ergibt, zeitweise kurzgeschlossen wird. Hierdurch muss, da im Gleichrichter weniger Verlustleistung in Wärme umgesetzt werden kann, ein Teil der zusätzlichen Verlustleistung im (robusten, und daher hierfür geeigneten) Generator in Wärme umgesetzt werden. Die erfindungsgemäßen Maßnahmen lassen sich mit besonderem Vorteil in fünfphasigen Systemen anwenden, prinzipiell ist das vorgestellte Verfahren aber auch bei Systemen mit anderer Phasenzahl realisierbar, wobei es sich insbesondere um Systeme mit 3+n mit n = 0, 1, 2 ... Phasen handeln kann.

Weitere Vorteile und Ausgestaltungen der Erfindungen ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Es zeigen:
Figur 1 einen Längsschnitt durch einen Wechselstromgenerator für Kraftfahrzeuge gemäß dem Stand der Technik.
Figur 2 ein Schaltbild eines Generators für einen fünfphasigen Wechselstrom mit einem Brückengleichrichter gemäß dem Stand der Technik.
Figur 3 ein vereinfachtes Schaltbild eines Generators für einen fünfphasigen Wechselstrom mit einem Brückengleichrichter gemäß dem Stand der Technik mit Angabe des Stromflusses.
Figur 4 ein Ansteuerschema für Schaltelemente eines Brückengleichrichters im normalen Gleichrichterbetrieb gemäß dem Stand der Technik.
Figur 5 ein weiteres Ansteuerschema für Schaltelemente eines Brückengleichrichters im normalen Gleichrichterbetrieb gemäß dem Stand der Technik.
Figur 6 ein vereinfachtes Schaltbild eines Generators für einen fünfphasigen Wechselstrom mit einem Brückengleichrichter gemäß dem Stand der Technik mit Angabe des Stromflusses in einer Lastabwurfssituation.
Figur 7 Ansteuerschemata für Schaltelemente eines Brückengleichrichters in einer Lastabwurfssituation gemäß besonders bevorzugter Ausführungsformen der Erfindung.
Figur 8 ein weiteres Ansteuerschema für Schaltelemente eines Brückengleichrichters in einer Lastabwurfssituation gemäß einer besonders bevorzugten Ausführungsform der Erfindung.
Figur 9 Verlustleistungen von Schaltelementen eines Brückengleichrichters in einer Lastabwurfssituation bei Anwendung eines Verfahrens gemäß dem Stand der Technik.
Figur 10 Verlustleistungen von Schaltelementen eines Brückengleichrichters in einer Lastabwurfssituation bei Anwendung eines Verfahrens gemäß dem in Figur 7A dargestellten Schema.
Figur 11 Verlustleistungen von Schaltelementen eines Brückengleichrichters in einer Lastabwurfssituation bei Anwendung eines Verfahrens gemäß dem in Figur 8 dargestellten Schema.
Figur 12 Temperatur- und Stromverläufe in Schaltelementen eines Brückengleichrichters für einen dreiphasigen Strom in einer Lastabwurfssituation gemäß dem Stand der Technik und bei Anwendung eines Verfahrens gemäß dem in Figur 7B dargestellten Schema.

### Ausführungsform(en) der Erfindung

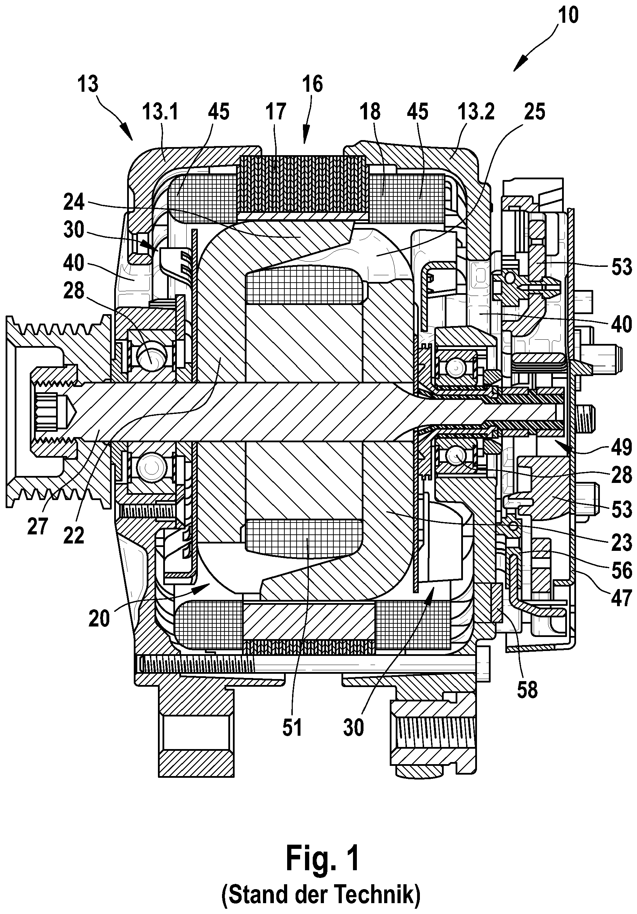

In Fig. 1 ist ein Schnitt durch einen Wechselstromgenerator 10 für Kraftfahrzeuge gemäß dem Stand der Technik dargestellt, bei dem das erfindungsgemäße Verfahren realisiert sein kann.

Der Generator weist ein zweiteiliges Gehäuse 13 mit einem ersten Lagerschild 13.1 und einem zweiten Lagerschild 13.2 auf. Das Lagerschild 13.1 und das Lagerschild 13.2 nehmen einen Stator 16 mit einem ringförmigen Blechpaket 17 auf, in das eine Statorwicklung 18 eingelegt ist. Der Stator 16 umgibt mit seiner radial nach innen gerichteten Oberfläche einen Rotor 20.

Der Rotor 20 weist zwei Klauenpolplatinen 22 und 23 mit Klauenpolfingern 24 und 25 an ihrem jeweiligen Außenumfang auf. Beide Klauenpolplatinen 22 und 23 sind derart angeordnet, dass sich ihre jeweiligen Klauenpolfinger 24 bzw. 25 am Umfang des Rotors 20 als Nord- und Südpole abwechseln.

Der Rotor 20 ist mittels einer Welle 27 und je einem auf je einer Rotorseite befindlichen Wälzlager 28 in den jeweiligen Lagerschilden 13.1 beziehungsweise 13.2 drehbar gelagert. Er weist zwei axiale Stirnflächen auf, an denen jeweils ein Lüfter 30 befestigt ist.

Die Lüfter 30 dienen dazu, über Öffnungen 40 in den Lagerschilden 13.1 und 13.2 einen Luftaustausch mit dem Innenraum der elektrischen Maschine 10 zu ermöglichen. Hierzu wird Kühlluft durch die Rotation der Lüfter 30 radial nach außen beschleunigt, so dass diese durch die kühlluftdurchlässigen Wickelköpfe 45 auf der Antriebsseite und 46 auf der Elektronikseite hindurchtreten kann. Eine Schutzkappe 47 schützt verschiedene Bauteile, wie beispielsweise eine Schleifringbaugruppe 49, die eine Erregerwicklung 51 mit Erregerstrom versorgt, vor Umgebungseinflüssen. Um die Schleifringbaugruppe 49 herum ist ein Kühlkörper 53 angeordnet, der als Pulskühlkörper wirkt und an dem Pulsdioden montiert sind. Zwischen dem Lagerschild 13.2 und dem Kühlkörper 53 ist eine Anschlussplatte 56 angeordnet, welche im Lagerschild 13.2 befestigte Minusdioden 58 und in dieser Darstellung nicht gezeigte Plusdioden im Kühlkörper in Form einer Brückenschaltung 29 miteinander verbindet.

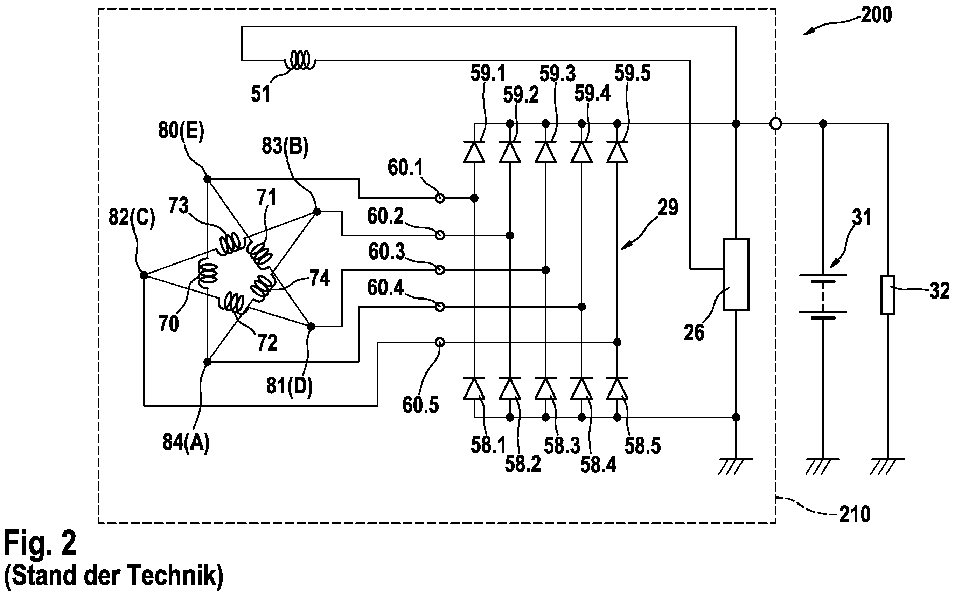

In Figur 2 ist ein Wechselstromgenerator 102 gemäß dem Stand der Technik mit fünf phasenbildenden Wicklungsträgen 70 bis 74 anhand eines Schaltbildes dargestellt.

Die Gesamtheit aller Wicklungsstränge 70 bis 74 bildet die Ständerwicklung 18 (siehe Figur 1). Die fünf phasenbildenden Wicklungsstränge 70 bis 74 sind zu einer Grundschaltung als fünfzackiger Stern (Drudenfuß) verschaltet, wobei die jeweils in den Zacken des Sterns verschalteten Stränge einen Winkel von ca. 36° einschließen. An den Verschaltungspunkten 80 bis 84 der Zacken des fünfzackigen Sterns ist eine Gleichrichterbrückenschaltung 29 angeschlossen. Über die Verschaltungspunkte 80 bis 84 werden beim Betrieb des Generators die fünf Phasen A bis E eines fünfphasigen Wechselstroms abgegeben. Die Wicklungsstränge sind wie folgt verschaltet:
Der Wicklungsstrang 70 ist am Verschaltungspunkt 80 mit dem Wicklungsstrang 71 verbunden. Der Wicklungsstrang 71 ist an seinem gegenüberliegenden Ende am Verschaltungspunkt 81 mit dem Wicklungsstrang 72 verbunden. Der Wicklungsstrang 72 ist an seinem gegenüberliegenden Ende am Verschaltungspunkt 82 mit dem Wicklungsstrang 73 verbunden. Der Wicklungsstrang 73 ist an seinem gegenüberliegenden Ende am Verschaltungspunkt 83 mit dem Wicklungsstrang 74 verbunden. Der Wicklungsstrang 74 ist an seinem gegenüberliegenden Ende am Verschaltungspunkt 84 mit dem Wicklungsstrang 70 verbunden. Die Verschaltungspunkte befinden sich vorzugsweise axial auf der neben dem elektronikseitigen Wickelkopf 46 um kurze Verschaltungswege zu realisieren.

Die Verschaltungspunkte 80 bis 84 der Wicklungsstränge 70 bis 74 sind über Eingänge 60.1 bis 60.5 mit dem separaten Brückengleichrichter 29 verbunden, der aus fünf Minusdioden 58.1 bis 58.5 und fünf Plusdioden 59.1 bis 59.5 aufgebaut ist. Gleichspannungsseitig ist ein Spannungsregler 26 parallel geschaltet, der durch Beeinflussung des Stromes durch die Erregerwicklung 51 die Spannung des Generators regelt. Der Spannungsregler 26 kann zusätzlich noch eine Verbindung zum Gleichrichter 29 aufweisen, um den Spannungsabfall über einer Diode zu messen und hieraus die aktuelle Drehzahl des Generators zu ermitteln und hierdurch ein Taktsignal zu erzeugen. Das Bordnetz ist schematisch durch die Fahrzeugbatterie 31 und durch Fahrzeugverbraucher 32 dargestellt. Der Gleichrichter und der zugehörige Generator sind in einem Gehäuse 210 angeordnet.

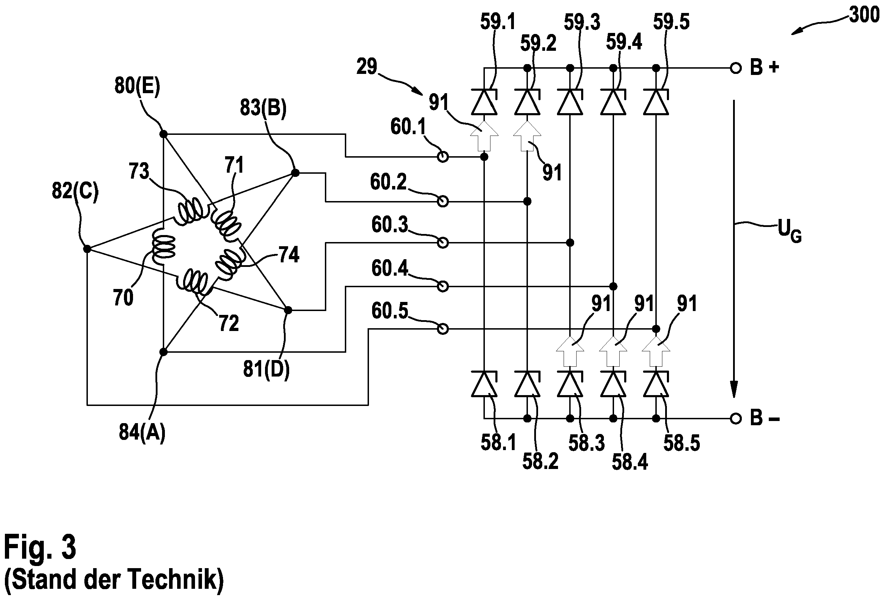

Figur 3 zeigt eine Anordnung 300 mit einem fünfphasigen Generator und einem Zenerdioden-Gleichrichter gemäß dem Stand der Technik. Es sei zu verstehen gegeben, dass ein derartiger Gleichrichter anstelle der dargestellten Dioden aktive Schaltelemente wie etwa MOSFETs oder IGBTs aufweisen kann, mittels derer jeweils ein Gleichrichtereingang 60.1 bis 60.5 wahlweise mit einem ersten B+ oder zweiten B- Ausgang verbunden (bzw. zu diesem durchgesteuert) werden kann. Eine entsprechende Verschaltung kann jedoch gut mittels der Dioden der Figur 3 abgebildet werden. Gegenüber der Figur 2 ist die Darstellung vereinfacht. Insbesondere sind an Stelle der zuvor dargestellten Batterie 31 lediglich zwei Batteriepole B+ und B- dargestellt, zwischen denen eine Generatorspannung U_{G} anliegt. Auf eine Darstellung der Erregerwicklung 51 und des Bordnetzverbrauchers 32 wurde verzichtet.

In der Schaltung 300 sind zusätzlich mit Pfeilen 91 Stromrichtungen angegeben. Im normalen Gleichrichterbetrieb befinden sich stets entweder zwei Plusdioden (z.B. 59.1, 59.2) und drei Minusdioden (z.B. 58.3 bis 58.5) oder (in der Figur nicht dargestellt) drei der Plusdioden 59.1 bis 59.5 und zwei der Minusdioden 58.1 bis 58.5 im leitenden, d.h. niederohmigen Zustand. Die jeweils leitenden Dioden wechseln zyklisch durch.

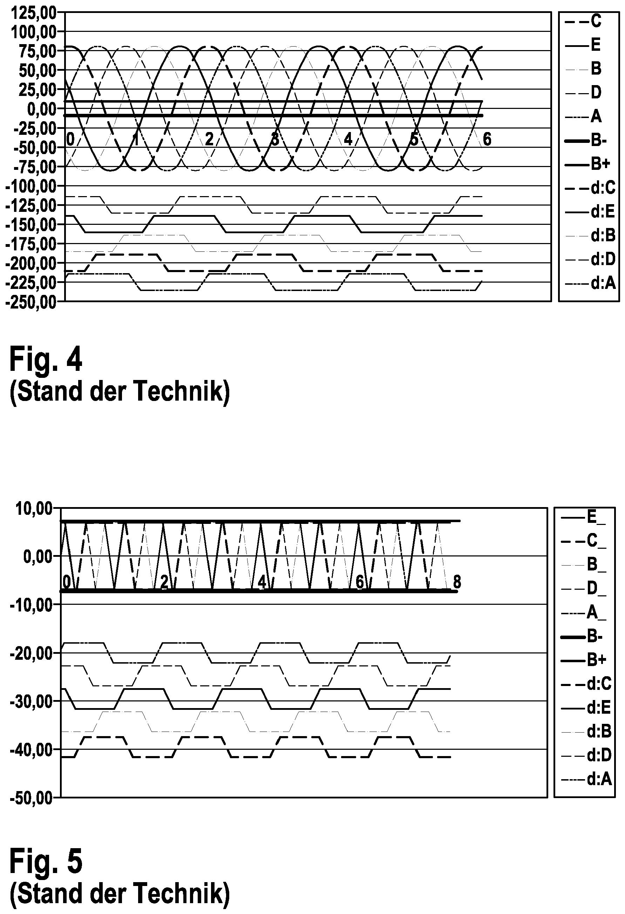

In Figur 4 ist eine Ansteuerabfolge eines aktiven Gleichrichters bei Normalbetrieb (d.h. außerhalb einer Lastabwurfssituation) in Form von Spannungsverläufen über die Zeit dargestellt. Die hieraus resultierenden Spannungssignale an den Ausgängen B+ und B- sind ebenfalls angegeben.

Für die Phasenspannungen sind die angenommenen freien Leerlaufspannungen A bis E abgebildet, die den über die Verschaltungspunkte 80 bis 84 eines entsprechenden Generators ausgegebenen Phasen entsprechen. Ferner sind die Schaltzustände der Schaltelemente dargestellt und mit d:A bis d:E bezeichnet. Der jeweils niedrigere Wert in den Verläufen d:A bis d:E bedeutet hierbei, dass der zugehörige MOSFET nach B- durchgesteuert wird, der hohe, das der entsprechende MOSFET zu B+ durchgesteuert wird. Im realen Gleichrichterbetrieb wird durch den Kurzschluss der leitfähigen Dioden das Potential der Phasen jeweils auf B+ zusätzlich der Diodenflussspannung bzw. auf B- abzüglich der Diodenflussspannung gezwungen.

Eine entsprechende Ansteuerfolge ist in Figur 5 dargestellt. Die Ansteuerfolge bildet jeweils den Verlauf der Phasenspannung A_ bis E_ ab, die, wie zuvor erläutert, den Phasenspannungen A bis E im realen Gleichrichterbetrieb entsprechen.

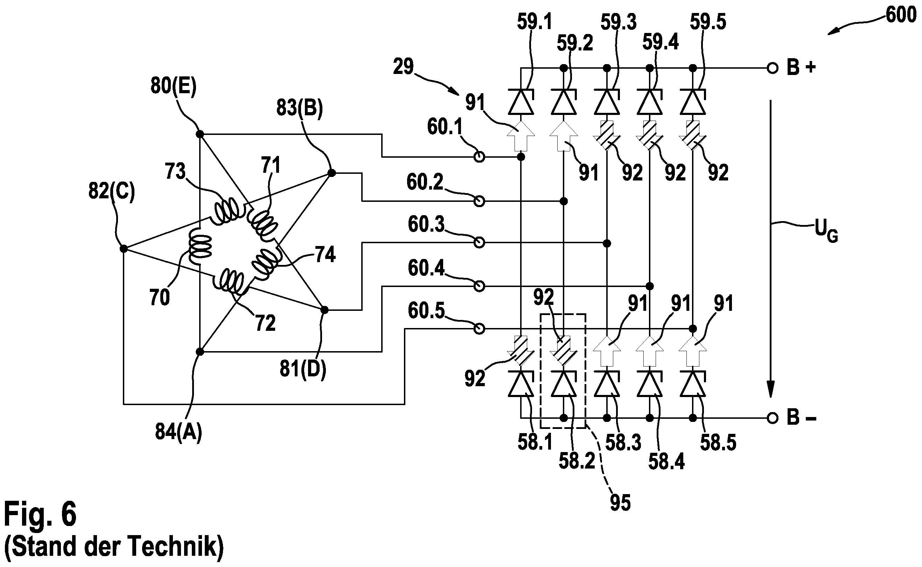

Figur 6 zeigt eine Momentaufnahme der Stromverteilung in einer der Schaltung 300 der Figur 3 entsprechenden Schaltung 600 im Fall eines Lastabwurfs in Form einer Momentaufnahme. Wie in Figur 3 bezeichnen die nichtschraffierten Pfeile 91 einen Strom in Diodenflussrichtung, zusätzlich ist durch die schraffierten Pfeile 92 ein Strom in Zenerrichtung angegeben. Die Ströme 92 in Zenerrichtung sind insbesondere deshalb kritisch, weil aufgrund der höheren Spannung eine höhere Verlustleistung (U × I) durch die Sperrströme erzeugt wird.

Gemäß einer besonders bevorzugten Ausführungsform der vorliegenden Erfindung ist nun vorgesehen, Schalter in dieser Zenerrichtung für die Zeitdauer einer kompletten Halbwelle durchlaufend, d. h. zyklisch, kurzzuschließen. Während eines derartigen Kurzschlusses wird eine deutlich reduzierte Verlustenergie wirksam. Hierdurch wird für einen gewissen Zeitraum eine thermische Entlastung geschaffen, während die Bordnetzversorgung während dieses Zeitraums bestehen bleibt.

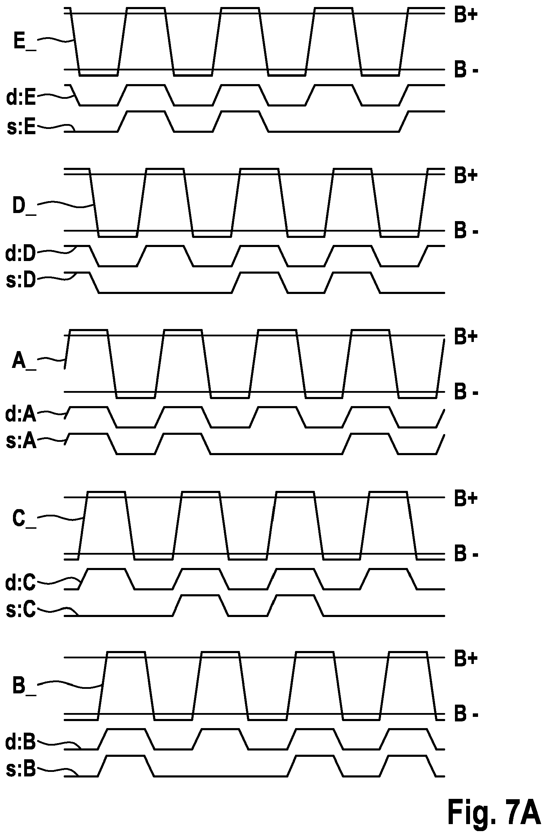

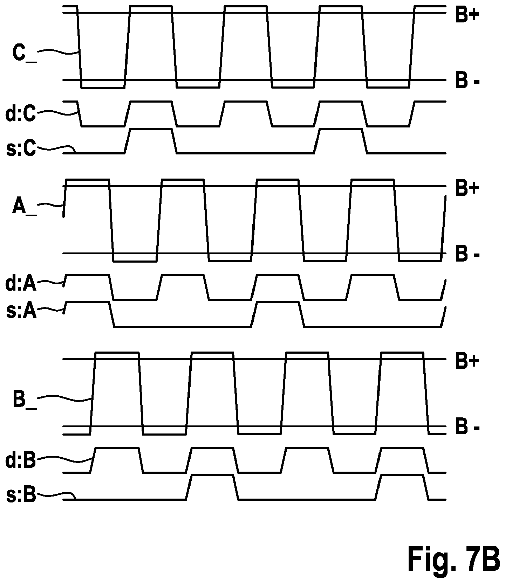

Mögliche Ansteuerfolgen gemäß besonders bevorzugter Ausführungsformen der Erfindung sind in Figur 7 gezeigt. Figur 7A zeigt hierbei ein Ansteuerschema für einen fünfphasigen Strom, in Figur 7B ist ein analoges Schema für einen dreiphasigen Strom angegeben. Die Verläufe A_ bis E_ bzw. A_ bis C_, d:A bis d:E bzw. d:A bis D:C sowie B+ und B- entsprechen zunächst jenen der Figur 5.

Das Verfahren für den Verlauf der Figur 7A kann wie folgt erläutert werden. Die Ansteuersequenz ergibt sich bei Betrieb mit einem 5-phasigen Generator. Der hohe Pegel im Verlauf d:B entspricht einer Ansteuerung des Schalters in Richtung B+ (in Figur 6 durch die Diode 59.2 symbolisiert). Der gegenüberliegende Zweig in Richtung B- (in Figur 6 mit 95 bezeichnet) befindet sich zu diesem Zeitpunkt in Zenerung (Diode 58.2 der Figur 6). Wenn nun zu diesem Zeitpunkt der Schalter zwischen dem Verschaltungspunkt 83 und dem Batteriepol B- aktiv geschlossen (kurzgeschlossen) wird, wird das Potential des Verschaltungspunktes 83 auf Masse gezwungen. Die ansonsten hohe Verlustleistung durch Umsetzung der Zenerspannung tritt also nicht auf. Ferner wird der Stromanteil, der in Richtung B+ fließen würde, auf B- abgeleitet. Dieses Schema kann nun, wie in Figur 7A gezeigt, zyklisch auf die anderen Schalter angewendet werden. In Figur 7A sind mit s:A bis s:E die erfindungsgemäßen Verläufe gemäß dieser Ausführungsform angegeben, was also einem Ansteuerschema zur Reduktion der Verlustleistung während des Lastabwurfs im unteren Zweig des Brückengleichrichters entspricht. Es wird also zu jedem Zeitpunkt genau eine positive Halbwelle zum Pol B- durchgesteuert.

Im Schema der Figur 7B, das der Figur 7A prinzipiell entspricht, wird ebenfalls zu jedem Zeitpunkt nicht mehr als eine positive Halbwelle zu B- durchgesteuert. Die Ansteuersequenz ergibt sich bei Betrieb mit einem 3-phasigen Generator. Auch hier wird also ein zyklisches (hier abwechselndes) Kurzschließen der jeweiligen Schalter eines Zweiges vorgenommen.

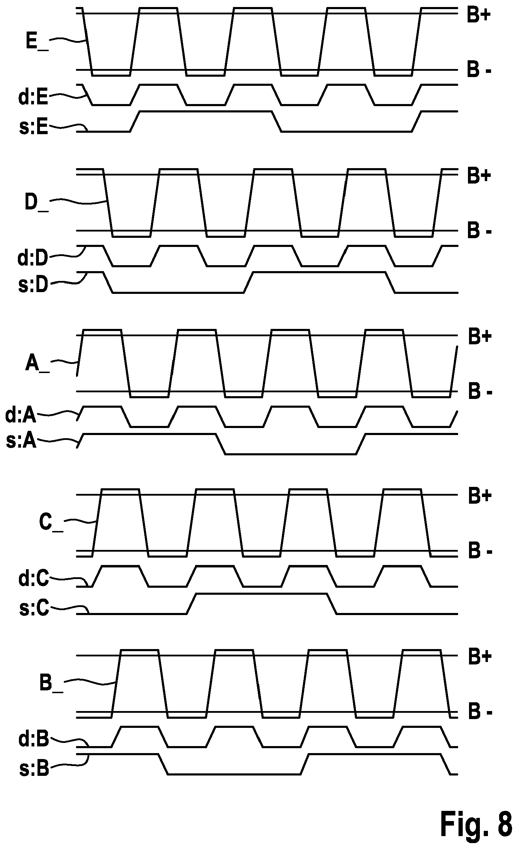

Durch Anwendung des gleichen Prinzips im oberen Zweig der Gleichrichterbrücke ergibt sich eine weitere Entlastung in diesem Zweig. Das zugehörige Ansteuerschema für einen fünfphasigen Strom ist in Figur 8 gezeigt und wie in Figur 7A bezeichnet. In Figur 8 ergibt sich also ein regelmäßiges Ansteuerschema mit um Faktor 3 verlängerten Ansteuerzeiten gegenüber dem Normalbetrieb.

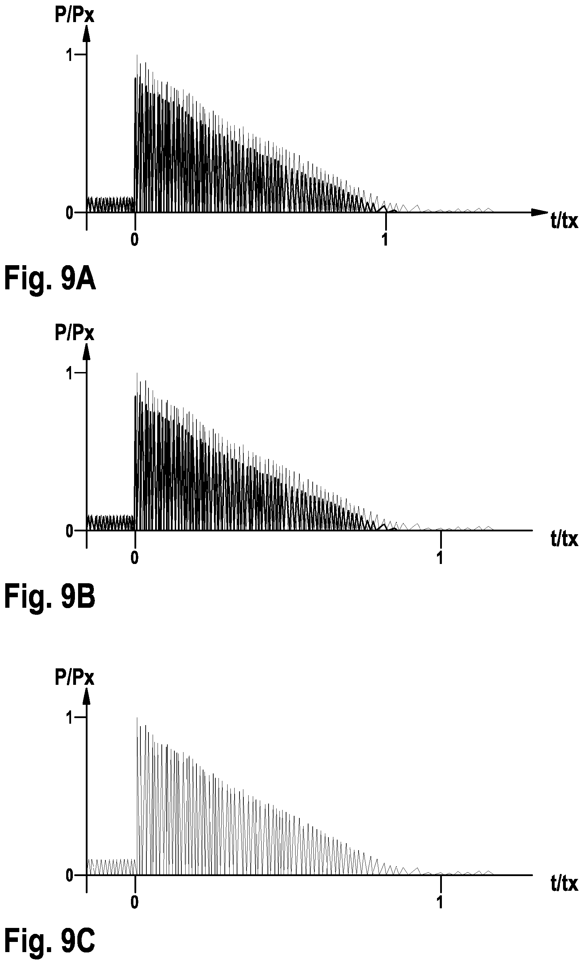

Die erfindungsgemäßen Maßnahmen wurden im Rahmen einer Simulation, wie in den Figuren 9 bis 11 dargestellt, auf ihre Wirksamkeit hin überprüft. Simuliert wurde hierbei ein vollständiger Lastabwurf (100% Load Dump) an einem fünfphasigen Generator. Die Erregerspule befand sich vor dem simulierten Lastabwurfereignis in einem vollständig erregten und der Generator in einem eingeschwungenen Zustand. Das Kurzschließen der Schaltelemente wurde durch gesteuerte Elemente durchgeführt.

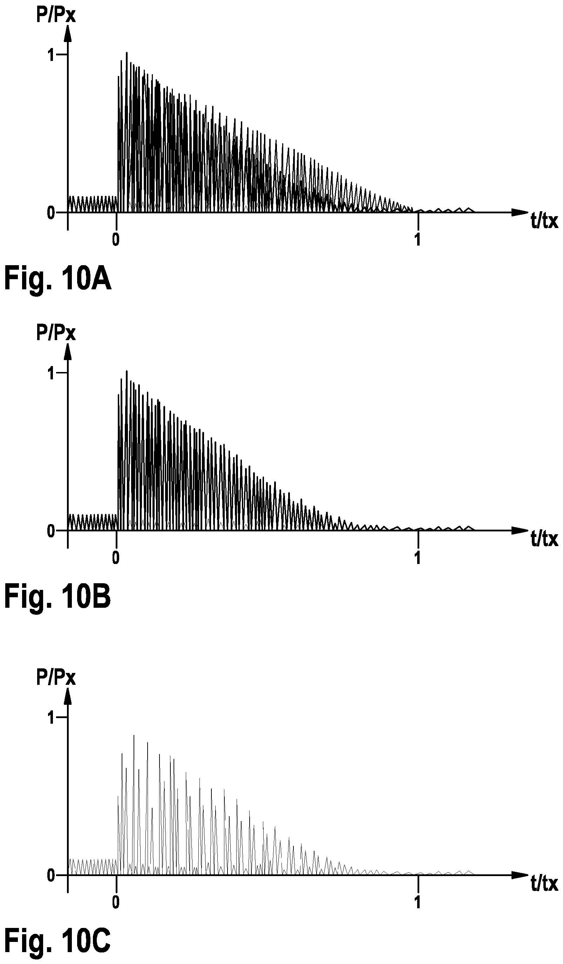

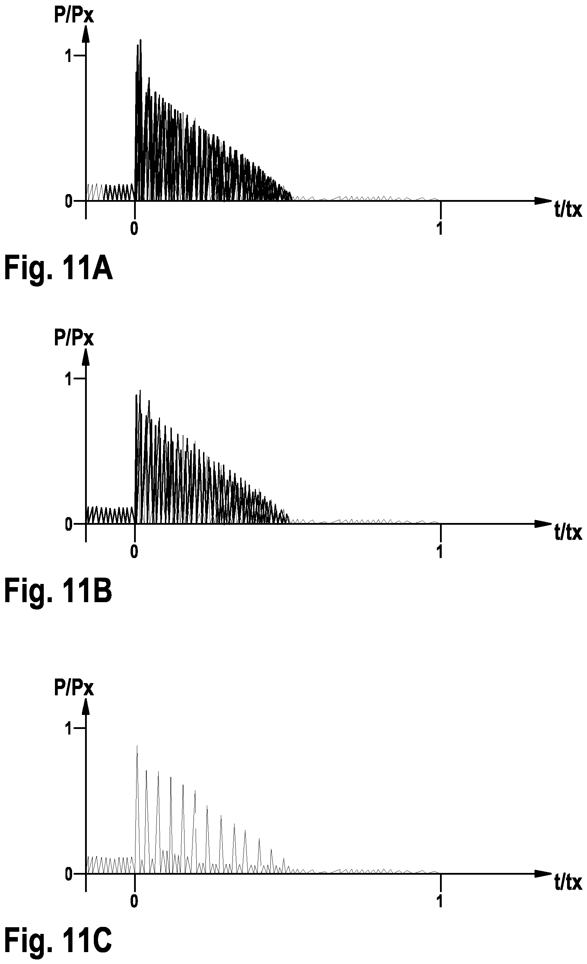

In Figur 9 ist dabei die Reaktion eines Systems und die zugehörige Verlustleistung gemäß dem Stand der Technik bei Auftreten eines Lastabwurfsereignisses angegeben. Figur 10 entspricht einem gemäß dem Schema der Figur 7A angesteuerten System mit einem Eingriff in einen Gleichrichterzweig und Figur 11 ein gemäß einem Schema der Figur 8 angesteuerten System mit einem Eingriff in beide Gleichrichterzweige.

In den Teilfiguren 9A, 10A und 11A ist jeweils die Verlustleistung in den Elementen im oberen Zweig des Brückengleichrichters, in den Teilfiguren 9B, 10B und 11B die Verlustleistung in den Elementen im unteren Zweig des Brückengleichrichters und in den Teilfiguren 9C, 10C und 11C die Verlustleistung eines einzelnen Elements im unteren Zweig angegeben.

In den Graphen bezeichnet jeweils t die Zeitdauer des Lastabwurfs. P bezeichnet die Verlustleistung in einem bzw. in mehreren Elementen ohne Berücksichtung des Schalterelements. Durch die in den Figuren 9 bis 11 dargestellten Simulationen konnte eine Reduktion der Verlustleistung um den Faktor 3 bis 4 bei Einsatz der erfindungsgemäßen Verfahren ermittelt werden.

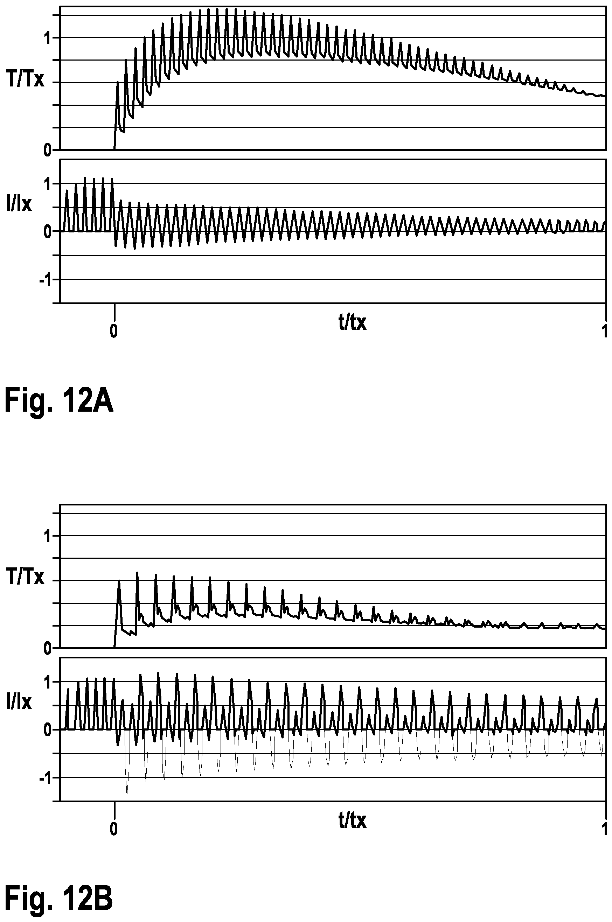

Figur 12 zeigt Temperatur- und Stromverläufe in Schaltelementen eines Dreiphasen-Brückengleichrichters bei einer Ansteuerung gemäß dem Stand der Technik (Figur 12 A) und bei Anwendung eines erfindungsgemäßen Verfahrens gemäß dem in Figur 7B dargestellten Ansteuerschema (Figur 12B), das bei dem von dem Generator gelieferten dreiphasigen Strom zum Einsatz kam. Wie in der in den Figuren 9 bis 11 dargestellten Situation war die Erregerspule vor dem Eintritt des Lastabwufsereignisses vollständig erregt und der Generator befand sich im eingeschwungenen Zustand. Mit t ist die Zeitdauer des Lastabwurfs bezeichnet; T gibt den Temperaturverlauf an.

Aus der Figur ist ersichtlich, dass durch das erfindungsgemäße Verfahren eine signifikante Reduktion der Temperatur erzielt werden konnte. Hierbei wurde ein Reduktionsfaktor von 2 nachgewiesen.

## Patentansprüche

1. Verfahren zur Reduzierung von Lastabwurf-Überspannungen beim Betrieb eines Synchrongleichrichters (29) für einen mehrphasigen Wechselstrom mit einer Anzahl von Eingängen (60.1 bis 60.5), die der Anzahl von Wechselstromphasen (A bis E) des Wechselstroms entspricht, und wenigstens zwei Ausgängen (B+, B-) zur Bereitstellung eines Gleichstroms, wobei an jeden Eingang (60.1 bis 60.5) jeweils eine Wechselstromphase (A bis E) angeschlossen und nach Maßgabe von Steuermitteln jeder der Eingänge (60.1 bis 60.5) elektrisch durch Schaltelemente wahlweise entweder mit dem ersten (B+) oder dem zweiten (B-) Ausgang verbunden wird,
wobei der erste Ausgang (B+) ein positiver Batteriepol und der zweite Ausgang (B-) ein negativer Batteriepol ist,
**dadurch gekennzeichnet, dass** bei Feststellung eines Lastabwurfs eine Ansteuersequenz aktiviert und auf Grundlage der Ansteuersequenz zyklisch
- dann, wenn an einer an einem dieser Eingänge (60.1 bis 60.5) angeschlossenen Wechselstromphase (A bis E) eine positiven Halbwelle anliegt, genau dieser Eingang (60.1 bis 60.5) während der vollständigen positiven Halbwelle mit dem zweiten Ausgang (B-) verbunden wird, und/oder
- dann, wenn an einer an einem dieser Eingänge (60.1 bis 60.5) angeschlossenen Wechselstromphase (A bis E) eine negative Halbwelle anliegt, genau dieser Eingang (60.1 bis 60.5) während der vollständigen negativen Halbwelle mit dem ersten Ausgang (B+) verbunden wird, und
für jeden übrigen Eingang (60.1 bis 60.5) dann, wenn an einer an dem jeweiligen Eingang (60.1 bis 60.5) angeschlossenen Wechselstromphase (A bis E) eine positive Halbwelle anliegt der jeweilige Eingang (60.1 bis 60.5) mit dem ersten Ausgang (B+) verbunden wird, und dann, wenn an der an dem jeweiligen Eingang (60.1 bis 60.5) angeschlossenen Wechselstromphase (A bis E) eine negative Halbwelle anliegt, der jeweilige Eingang (60.1 bis 60.5) mit dem zweiten Ausgang (B-) verbunden wird.

2. Verfahren nach Anspruch 1, **dadurch gekennzeichnet, dass** als Ansteuersequenz eine Zeitsteuerung oder eine Winkelansteuerung verwendet wird.

3. Verfahren nach Anspruch 1 oder 2, das bei einem Gleichrichter eines Generators eines Kraftfahrzeugs durchgeführt wird.

4. Verfahren nach einem der vorstehenden Ansprüche, bei dem der Wechselstrom ein drei- oder 3+n-phasiger Wechselstrom ist.

5. Verfahren nach einem der vorstehenden Ansprüche, bei dem eine Frequenz wenigstens einer Wechselstromphase (A bis E) bestimmt wird.

6. Verfahren nach Anspruch 5, bei dem die Frequenz der wenigstens einen Wechselstromphase für die Zeitsteuerung verwendet wird.

7. Verfahren nach einem der vorstehenden Ansprüche, bei dem die wahlweise elektrische Verbindung mittels MOSFET- oder IGB-Transistoren durchgeführt wird.

8. Verfahren nach einem der vorstehenden Ansprüche, bei dem ein Lastabwurf auf Grundlage einer Ausgangsspannung zwischen den Ausgängen (B+, B-) des Gleichrichters (29) festgestellt wird.

9. Verfahren nach einem der vorstehenden Ansprüche, bei dem
bei Vorliegen erster Bedingungen jeweils genau ein Eingang (60.1 bis 60.5) für den Zeitraum des Anliegens einer vollständigen positiven Halbwelle einer an diesem Eingang (60.1 bis 60.5) angeschlossenen Wechselstromphase (A bis E) mit dem zweiten (B-) Ausgang verbunden wird oder jeweils genau ein Eingang (60.1 bis 60.5) für den Zeitraum des Anliegens einer vollständigen negativen Halbwelle einer an diesem Eingang (60.1 bis 60.5) angeschlossenen Wechselstromphase (A bis E) mit dem ersten (B+) Ausgang verbunden wird, und
bei Vorliegen zweiter Bedingungen jeweils genau ein Eingang (60.1 bis 60.5) für den Zeitraum des Anliegens einer vollständigen positiven Halbwelle einer an diesem Eingang (60.1 bis 60.5) angeschlossenen Wechselstromphase (A bis E) mit dem zweiten (B-) Ausgang verbunden wird und jeweils genau ein Eingang (60.1 bis 60.5) für den Zeitraum des Anliegens einer vollständigen negativen Halbwelle einer an diesem Eingang (60.1 bis 60.5) angeschlossenen Wechselstromphase (A bis E) mit dem ersten (B+) Ausgang verbunden wird.

10. Verfahren nach Anspruch 9, bei dem die ersten und die zweiten Bedingungen unterschiedliche bestimmte Ausmaße von Lastabwürfen sind.

11. Verfahren nach einem der vorhergehenden Ansprüche, bei dem Ansteuerzeiten der Ansteuersequenz um einen Faktor ≥ 3 erhöht werden, wobei der Faktor vorzugsweise entsprechend 3 + 2 x n, mit n = 0,1,2... berechnet wird.

12. Vorrichtung, die einen Synchrongleichrichter (14) für einen mehrphasigen Wechselstrom mit einer Anzahl von Eingängen (60.1 bis 60.5), die der Anzahl von Wechselstromphasen (A bis E) des Wechselstroms entspricht, und wenigstens zwei Ausgängen (B+, B-) zur Bereitstellung eines Gleichstroms aufweist, wobei an jeden Eingang (60.1 bis 60.5) jeweils eine Wechselstromphase (A bis E) angeschlossen und nach Maßgabe von Steuermitteln jeder der Eingänge (60.1 bis 60.5) elektrisch wahlweise entweder mit dem ersten (B+) oder dem zweiten (B-) Ausgang verbindbar ist, wobei der erste Ausgang (B+) ein positiver Batteriepol und der zweite Ausgang (B-) ein negativer Batteriepol ist,
**gekennzeichnet durch** eine Zeitsteuerung und Mittel, die dazu eingerichtet sind, bei Feststellung eines Lastabwurfs auf Grundlage der aktivierten Ansteuersequenz durch Schaltelemente
- dann, wenn an einer an einem dieser Eingänge (60.1 bis 60.5) angeschlossenen Wechselstromphase (A bis E) eine positiven Halbwelle anliegt, genau diesen Eingang (60.1 bis 60.5) während der vollständigen positiven Halbwelle mit dem zweiten Ausgang (B-) zu verbinden, und/oder
- dann, wenn an einer an einem dieser Eingänge (60.1 bis 60.5) angeschlossenen Wechselstromphase (A bis E) eine negative Halbwelle anliegt, genau diesen Eingang (60.1 bis 60.5) während der vollständigen negativen Halbwelle mit dem ersten Ausgang (B+) zu verbinden, und
für jeden übrigen Eingang (60.1 bis 60.5) dann, wenn an einer an dem jeweiligen Eingang (60.1 bis 60.5) angeschlossenen Wechselstromphase (A bis E) eine positive Halbwelle anliegt, den jeweiligen Eingang (60.1 bis 60.5) mit dem ersten Ausgang (B+) zu verbinden, und dann, wenn an der an dem jeweiligen Eingang (60.1 bis 60.5) angeschlossenen Wechselstromphase (A bis E) eine negative Halbwelle anliegt, den jeweiligen Eingang (60.1 bis 60.5) mit dem zweiten Ausgang (B-) zu verbinden.

## Claims

1. A method for reducing load dump overvoltages when operating a synchronous rectifier (29) for a multiphase alternating current having a number of inputs (60.1 to 60.5) equal to the number of alternating current phases (A to E) of the alternating current, and at least two outputs (B +, B-) for providing a direct current, wherein an alternating current phase (A to E) respectively is connected to each input (60.1 to 60.5) and in accordance with control means, each of the inputs (60.1 to 60.5) is connected electrically via switching elements electively to either the first (B+) or the second (B-) output,
wherein the first output (B+) is a positive battery pole and the second output (B-) is a negative battery pole,
**characterised in that** upon detection of a load dump a drive sequence is activated and cyclically based on the drive sequence
- then, when a positive half cycle is applied to an alternating current phase (A to E) connected to one of these inputs (60.1 to 60.5), exactly said input (60.1 to 60.5) is connected to the second output (B-) during the full positive half cycle, and/or
- then, when a negative half cycle is applied to an alternating current phase (A to E) connected to one of these inputs (60.1 to 60.5), exactly said input (60.1 to 60.5) is connected to the first output (B+) during the full negative half cycle, and
for each remaining input (60.1 to 60.5) then, when a positive half cycle is applied to an alternating current phase (A to E) connected to the respective input (60.1 to 60.5), said respective input (60.1 to 60.5) is connected to the first output (B+), and then, when a negative half cycle is applied to an alternating current phase (A to E) connected to the respective input (60.1 to 60.5), said respective input (60.1 to 60.5) is connected to the second output (B-).

2. The method according to claim 1, **characterised in that** a time control or an angle control is used as a driving sequence.

3. The method according to claim 1 or 2, which is carried out in a rectifier of a generator of a motor vehicle.

4. The method according to any one of the preceding claims, in which the alternating current is a three or 3+n-phase alternating current.

5. The method according to any one of the preceding claims, wherein a frequency of at least one alternating current phase (A to E) is determined.

6. The method according to claim 5, wherein the frequency of the at least one alternating current phase is used for the time control.

7. The method according to any one of the preceding claims, in which the elective electrical connection is carried out by means of MOSFET or IGB-transistors.

8. The method according to any one of the preceding claims, in which a load dump is detected on the basis of an output voltage between the outputs (B +, B-) of the rectifier (29).

9. The method according to any one of the preceding claims, wherein
in a first set of conditions, exactly one input (60.1 to 60.5) is connected to the second output (B-) for the period of application of a complete positive half cycle of an alternating current phase (A to E) connected to said input (60.1 to 60.5), or exactly one input (60.1 to 60.5) is connected to the first output (B+) for the period of application of a complete negative half cycle of an alternating current phase (A to E) connected to said input (60.1 to 60.5), and
in a second set of conditions, exactly one input (60.1 to 60.5) is connected to the second output (B-) for the period of application of a complete positive half cycle of an alternating current phase (A to E) connected to said input (60.1 to 60.5), and exactly one input (60.1 to 60.5) is connected to the first output (B+) for the period of application of a complete negative half cycle of an alternating current phase (A to E) connected to said input (60.1 to 60.5).

10. The method according to claim 9, wherein in the first set of conditions and the second set of conditions are different predetermined amounts of load dumps.

11. The method according to any one of the preceding claims, in which drive times of the drive sequence are increased by a factor ≥ 3, said factor preferably being calculated to correspond to 3 + 2xn, where n = 0,1, 2 ...

12. A device including a synchronous rectifier (14) for a multiphase alternating current having a number of inputs (60.1 to 60.5) equal to the number of alternating current phases (A to E) of the alternating current, and at least two outputs (B +, B-) for providing a direct current, wherein an alternating current phase (A to E) respectively is connected to each input (60.1 to 60.5) and in accordance with control means, each of the inputs (60.1 to 60.5) is connected electively electrically via switching elements to either the first (B +) or the second (B-) output,
wherein the first output (B+) is a positive battery pole and the second output (B-) is a negative battery pole,
**characterized by** a time control and means configured to, after determination of a load dump, based on the activated drive sequence via switching elements
- then, when a positive half cycle is applied to an alternating current phase (A to E) connected to one of these inputs (60.1 to 60.5), connect exactly said input (60.1 to 60.5) to the second output (B-) during the full positive half cycle, and/or
- then, when a negative half cycle is applied to an alternating current phase (A to E) connected to one of these inputs (60.1 to 60.5), connect exactly said input (60.1 to 60.5) to the first output (B+) during the full negative half cycle, and
for each remaining input (60.1 to 60.5) then, when a positive half cycle is applied to an alternating current phase (A to E) connected to the respective input (60.1 to 60.5), connect said respective input (60.1 to 60.5) to the first output (B+), and then, when a negative half cycle is applied to an alternating current phase (A to E) connected to the respective input (60.1 to 60.5), connect said respective input (60.1 to 60.5) to the second output (B-).

## Revendications

1. Procédé pour réduire des surtensions de délestage de charge pendant le fonctionnement d'un redresseur synchrone (29) pour un courant alternatif multiphase, ayant une pluralité d'entrées (60.1 à 60.5) qui correspond au nombre de phases de courant alternatif (A à E) du courant alternatif, et au moins deux sorties (B+, B-) pour délivrer un courant continu, dans lequel une phase de courant alternatif (A à E) est respectivement connectée à chaque entrée (60.1 à 60.5) et chacune des entrées (60.1 à 60.5) est électriquement reliée via des éléments de commutation à la première sortie (B+) ou à la seconde sortie (B-) en fonction de moyens de commande,
dans lequel la première sortie (B+) est un pôle de batterie positif et la seconde sortie (B-) est un pôle de batterie négatif,
**caractérisé en ce qu'**une séquence de commande est activée lors de la détermination d'un délestage de charge et cycliquement sur la base de la séquence de commande
- lorsqu'une demi-onde positive est appliquée sur une phase de courant alternatif (A à E) connectée à l'une de ces entrées (60.1 à 60.5), alors cette entrée précise (60.1 à 60.5) est reliée à la seconde sortie (B-) pendant la demi-onde positive complète, et/ou
- lorsqu'une demi-onde négative est appliquée sur une phase de courant alternatif (A à E) connectée à l'une de ces entrées (60.1 à 60.5), alors cette entrée précise (60.1 à 60.5) est reliée à la première sortie (B+) pendant la demi-onde négative complète, et
pour chaque entrée (60.1 à 60.5) restante, lorsqu'une demi-onde positive est appliquée sur une phase de courant alternatif (A à E) connectée à l'entrée (60.1 à 60.5) respective, alors l'entrée (60.1 à 60.5) respective est reliée à la première sortie (B+), et lorsqu'une demi-onde négative est appliquée sur la phase de courant alternatif (A à E) connectée à l'entrée (60.1 à 60.5) respective, alors l'entrée (60.1 à 60.5) respective est reliée à la seconde sortie (B-).

2. Procédé selon la revendication 1, **caractérisé en ce qu'**une commande temporelle ou une commande angulaire est utilisée comme séquence de commande.

3. Procédé selon la revendication 1 ou 2, dans lequel le procédé est mis en oeuvre dans un redresseur d'un générateur de véhicule automobile.

4. Procédé selon l'une des revendications précédentes, dans lequel le courant alternatif est un courant alternatif triphasé ou à 3+n phases.

5. Procédé selon l'une des revendications précédentes, dans lequel une fréquence d'au moins une phase de courant alternatif (A à E) est déterminée.

6. Procédé selon la revendication 5, dans lequel la fréquence de la au moins une phase de courant alternatif est utilisée pour la commande temporelle.

7. Procédé selon l'une des revendications précédentes, dans lequel la connexion électrique est réalisée au moyen de transistors MOSFET ou IGB.

8. Procédé selon l'une des revendications précédentes, dans lequel un délestage de charge est déterminé sur la base d'une tension de sortie entre les sorties (B+, B-) du redresseur (29).

9. Procédé selon l'une des revendications précédentes, dans lequel
lorsque des premières conditions sont présentes, exactement une entrée (60.1 à 60.5) est respectivement reliée à la seconde sortie (B-) pendant la période d'existence d'une demi-onde positive complète d'une phase de courant alternatif (A à E) connectée à cette entrée (60.1 à 60.5), ou exactement une entrée (60.1 à 60.5) est respectivement reliée à la première sortie (B+) pendant la période d'existence d'une demi-onde négative complète d'une phase de courant alternatif (A à E) connectée à cette entrée (60.1 à 60.5), et
lorsque des secondes conditions sont présentes, exactement une entrée (60.1 à 60.5) est respectivement reliée à la seconde sortie (B-) pendant la période d'existence d'une demi-onde positive complète d'une phase de courant alternatif (A à E) connectée à cette entrée (60.1 à 60.5), et exactement une entrée (60.1 à 60.5) est respectivement reliée à la première sortie (B+) pendant l'intervalle d'existence d'une demi-onde négative complète d'une phase de courant alternatif (A à E) connectée à cette entrée (60.1 à 60.5).

10. Procédé selon la revendication 9, dans lequel les premières et secondes conditions sont différentes grandeurs de délestage de charge déterminées.

11. Procédé selon l'une des revendications précédentes, dans lequel des temps de commande de la séquence de commande sont augmentés d'un facteur ≥ 3, dans lequel le facteur est de préférence calculé d'après 3 + 2 × n, avec n = 0, 1, 2, etc.

12. Dispositif comportant un redresseur synchrone (14) pour un courant alternatif multiphase ayant une pluralité d'entrées (60.1 à 60.5) qui correspond au nombre de phases de courant alternatif (A à E) du courant alternatif, et au moins deux sorties (B+, B-) pour déterminer un courant continu, dans lequel une phase de courant alternatif (A à E) est respectivement connectée à chaque entrée (60.1 à 60.5), et chacune des entrées (60.1 à 60.5) peut être électriquement reliée à la première sortie (B+) ou à la seconde sortie (B-) en fonction de moyens de commande, dans lequel la première sortie (B+) est un pôle de batterie positif et la seconde sortie (B-) est un pôle de batterie négatif, **caractérisé par** une commande temporelle et des moyens qui sont alors configurés pour, lors de la détermination d'un délestage de charge sur la base de la séquence de commande activée via des éléments de commutation
- lorsqu'une demi-onde positive est appliquée sur une phase de courant alternatif (A à E) connectée à l'une de ces entrées (60.1 à 60.5), relier précisément cette entrée (60.1 à 60.5) à la seconde sortie (B-) pendant la demi-onde positive complète, et/ou
- lorsqu'une demi-onde négative est appliquée sur une phase de courant alternatif (A à E) connectée à l'une de ces entrées (60.1 à 60.5), relier précisément cette entrée (60.1 à 60.5) à la première sortie (B+) pendant la demi-onde négative complète, et
pour chaque entrée (60.1 à 60.5) restante, lorsqu'une demi-onde positive est appliquée sur une phase de courant alternatif (A à E) connectée à l'entrée (60.1 à 60.5) respective, relier l'entrée (60.1 à 60.5) respective à la première sortie (B+), et lorsqu'une demi-onde négative est appliquée sur la phase de courant alternatif (A à E) connectée à l'entrée (60.1 à 60.5) respective, relier l'entrée (60.1 à 60.5) respective à la seconde sortie (B-).
